# EUROPEAN PATENT APPLICATION

(11) **EP 2 088 789 A2**
(43) Date of publication of application: **12.08.2009**
(21) Application number: 09152175.7
(22) Date of filing: 05.02.2009
(51) Int. Cl.: H04N 13/00

(54) **Apparatus and method for generating and displaying media files**

(30) Priority: 05.02.2008 KR 20080011992; 05.03.2008 KR 20080020744; 04.09.2008 KR 20080087351
(71) Applicant: Samsung Electronics Co., Ltd., Suwon-si, Gyeonggi-do (KR)
(72) Inventor: Hwang, Seo-Young, Gyeonggi-do,Suwon-si (KR); Song, Jae-Yeon, Gyeonggi-do,Suwon-si (KR); Lee, Gun-III, Gyeonggi-do,Suwon-si (KR); Lee, Kook-Heui, Gyeonggi-do,Suwon-si (KR); Kim, Yong-Tae, Gyeonggi-do,Suwon-si (KR); Kim, Jae-Seung, Gyeonggi-do,Suwon-si (KR)
(74) Representative: Ketelaars, Maarten F.J.M.

(57) **Abstract**

A computer readable medium having data stored thereon is provided. A structure of the data includes a media data box including two or more media data, and a movie data ('moov') box including information on view sequence data in the media data. The 'moov' box includes track reference information indicating that a track box for one view sequence references a track box of another view sequence.

## Description

### BACKGROUND OF THE INVENTION

### 1. Field of the Invention

The present invention relates to an apparatus and method for generating and displaying stereoscopic media files.

### 2. Description of the Related Art

Moving Picture Experts Group (MPEG), a multimedia-related international standards organization, now proceeds with standardization work for MPEG-2, MPEG-4, MPEG-7 and MPEG-21, since the group's first standardization of MPEG-1. The development of such various standards results in a need to create a single profile that is a combination of different standard technologies, and as part of such a move, various Multimedia Application Formats (MAFs) are made with MPEG-A (MPEG Multimedia Application Format: ISO/IEC (International Organization for Standardization/International Electrotechnical Commission) 23000) multimedia application standardization activities. The MAFs are aimed to increase utility values of the standards by combining not only the existing MPEG standards but also non-MPEG standards together. It is possible to maximize their effective values by creating MAFs that are a combination of the already verified standard technologies without efforts to newly make separate standards.

Recently, intensive research relating to methods for implementing a Three-Dimensional (3D) video has been conducted to express more realistic video information. Among the methods, a promising method, which is considered to be effective in several respects, scans left-view images and right-view images on an existing display device at their associated locations to cause the left view and the right view to be imaged on the left eye and the right eye of the user separately, using visual characteristics of human beings, thereby allowing the user to feel 3D effects. For instance, a portable terminal equipped with a barrier Liquid Crystal Display (LCD) could provide the true-to-nature video to the user by replaying stereoscopic contents.

However, for the stereoscopic contents consisting of two or more view sequences, the syntax is not defined on the file format. Based on the syntax, it can be determined whether tracks of the view sequences in the stereoscopic contents are related to each other. The view sequences are video bitstreams composed of one or more video frames, and can also be referred to as elementary streams. Moreover, for the contents that includes a stereoscopic video and a monoscopic video, in which the stereoscopic video is spatially combined with a Two-Dimensional (2D) video, or the stereoscopic video and the monoscopic video appear together in one scene, for example, for the service in which there is an image caption at the bottom of a monoscopic music video and the image caption is displayed in a 2D image, the syntax on the file format is not defined, where, based upon the syntax it would be possible to determine whether the music video and the image caption are associated with each other. Therefore, it is necessary to additionally provide information indicating whether the music video and the image caption are related to each other.

### SUMMARY OF THE INVENTION

An aspect of the present invention is to address at least the problems and/or disadvantages and to provide at least the advantages described below. Accordingly, an aspect of the present invention is to provide a media file generation and displaying apparatus and method for explicitly determining whether tracks of view sequences are associated with each other, in regard to stereoscopic contents consisting of two or more view sequences or contents having a stereoscopic video and a monoscopic video, which are simultaneously displayed in one scene.

According to one aspect of the present invention, there is provided a computer readable medium having data stored thereon. A structure of the data includes a media data box including two or more media data; and a movie data ('moov') box including information on view sequence data in the media data. Preferably, the 'moov' box includes track reference information indicating that a track box for one view sequence references a track box of another view sequence.

According to another aspect of the present invention, there is provided a computer-implemented method. The method includes receiving a media file; parsing a media data box of the received media file including two or more view sequence data, and a movie data ('moov') box including information on the view sequence data; and generating a video based on a referencing view sequence and a referenced view sequence, according to track reference information, which is included in the 'moov' box and indicates that a track box for one view sequence references a track box for another view sequence.

According to further another aspect of the present invention, there is provided a terminal apparatus including a file parser for parsing a media data box of a media file including two or more view sequence data and a movie data ('moov') box including information on the view sequence data, and extracting a video based on a referencing view sequence and a referenced view sequence, according to track reference information, which is included in the 'moov' box and indicates that a track box for one view sequence references a track box for another view sequence; and a display unit for displaying the extracted video.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating an ISO-based media file format;
FIG. 2 is a diagram illustrating a file structure according to a first embodiment of the present invention;
FIGs. 3A and 3B are diagrams illustrating file structures designed to connect associated tracks to each other according to the first embodiment of the present invention;
FIG. 4 is a diagram illustrating an operation of a terminal according to the first embodiment of the present invention;
FIG. 5 is a diagram illustrating a file structure according to a second embodiment of the present invention;
FIG. 6 is a diagram illustrating a method for expressing a primary view sequence according to the second embodiment of the present invention;
FIG. 7 is a diagram illustrating an operation of a terminal according to the second embodiment of the present invention;
FIG. 8 is a diagram illustrating a file structure according to a third embodiment of the present invention;
FIG. 9 is a diagram illustrating a method for expressing a primary view sequence according to the third embodiment of the present invention;
FIG. 10 is a diagram illustrating a file structure according to a fourth embodiment of the present invention;
FIGs. 11A and 11B are diagrams illustrating file structures for a stereoscopic video according to a fifth embodiment of the present invention;
FIGs. 12A and 12B are diagrams illustrating file structures for multiview contents according to the fifth embodiment of the present invention;
FIG. 13 is a diagram illustrating a media file generation apparatus according to an embodiment of the present invention; and
FIG. 14 is a diagram illustrating a media file replay apparatus according to an embodiment of the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness. Terms used herein are defined based on functions in the present invention and may vary according to users, operators' intention or usual practices. Therefore, the definition of the terms should be made based on contents throughout the specification.

The present invention first provides an International Organization for Standardization (ISO)-based media file format. Further, the present invention provides a method for indicating a relationship between tracks that form a pair in stereoscopic contents consisting of two or more view sequences, and also provides a method for indicating a relationship between a stereoscopic video track and a monoscopic video track in contents having a stereoscopic video and a monoscopic video that are simultaneously displayed in one scene.

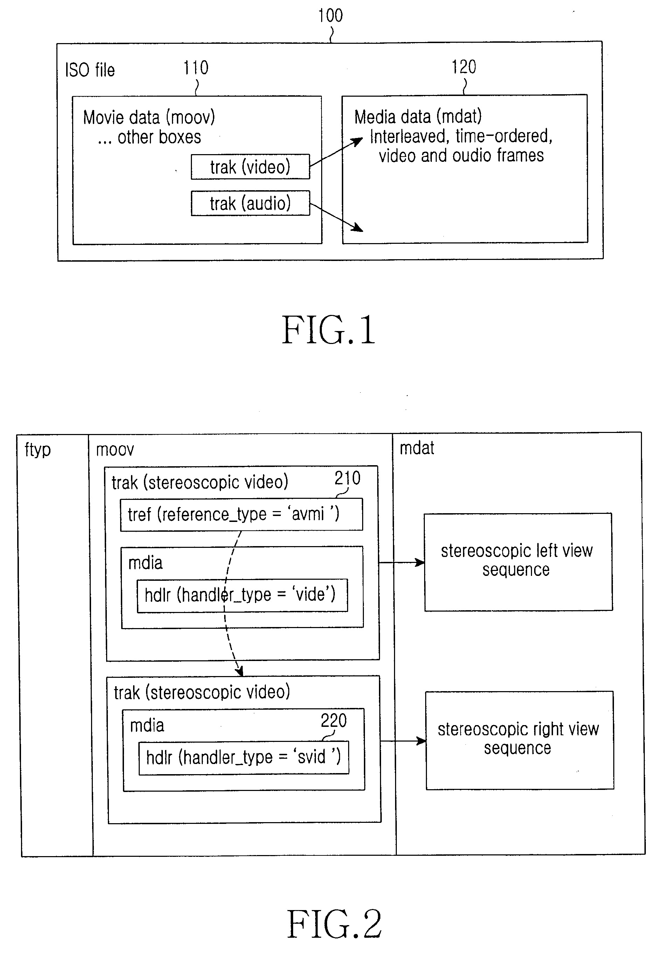

FIG. 1 illustrates an ISO-based media file format.

Referring to FIG. 1, an ISO-based media file 100 includes a file type box ('ftyp' box; not shown), a movie data box ('moov' box) 110, and a media data box ('mdat' box) 120. The file type box includes therein the details of a file type and a compatible type. Normal replay is possible in a corresponding decoder according to the compatible type. The 'moov' box 110 corresponds to a header box in a file format, and each data is formed of a structure based on an object called 'atom'. The 'moov' box 110 includes therein all information necessary for replaying a file, including content information such as a frame rate, a bit rate, an image size, etc. and synchronization information used to support a playback function such as Fast-Forward/Rewind (FF/REW). The media data box 120, a data box, includes actual media data therein, and video data and audio data are stored in each track in units of their frames.

A stereoscopic video includes stereoscopic video-related information. The stereoscopic video-related information can be the necessary information such as a composition type of a stereoscopic video, and can also be additional data such as camera parameters and display information. When a stereoscopic video is composed of two or more view sequences, each of the view sequences can have the same stereoscopic video-related information. For example, for a stereoscopic video consisting of two view sequences, each of the left view and right view of the video can include additional information about the same camera and display. When the view sequences each have the same stereoscopic video-related information in this way, in order to prevent the same information from being stored in each of the view sequences in a duplicate manner, the corresponding information can be contained in only one view sequence and the remaining view sequence(s) can reference the corresponding view sequence to use the corresponding stereoscopic video-related information contained in the corresponding view sequence. To this end, however, it is necessary to inform other elementary streams which elementary stream contains the stereoscopic video-related information, and to distinguish a view sequence containing the stereoscopic video-related information. For a stereoscopic video composed of two or more view sequences, the two view sequences can be divided into a primary view sequence and a secondary view sequence. When the stereoscopic video-related information is contained in only one elementary stream as described above, it is possible to check the corresponding information by distinguishing the primary view sequence from the secondary view sequence. The primary view sequence and the secondary view sequence described in the present invention distinguish a view sequence having a higher display priority when only one of two or more view sequences should be selected and displayed on a screen.

A method for distinguishing a primary view sequence from a secondary view sequence includes a first method of checking a track ID track_ID of each view sequence. A track header box ('tkhd' box) of each view sequence has a track ID track_ID, which is an identifier by which each track can be identified. Since the track ID is an integer value sequentially assigned to a track of each view sequence, a view sequence of a track having the least value of a track ID is determined as a primary view sequence.

A second method checks an 'is_left_first' parameter indicating which of the left view sequence and the right view sequence (or which of two or more view sequences) in composition type information of a stereoscopic video is first encoded, and determines which of the left view sequence and the right view sequence (or which of two or more view sequences) is the primary view sequence or the secondary view sequence according to a value of the corresponding parameter. A third method determines that a track that references another track, as a primary view sequence or a secondary view sequence.

In determining a primary view sequence based on information about track reference, when a referenced track (to which reference is made by another track) is determined as a primary view sequence, a reference track (that references another track) is determined as a secondary view sequence. Since a track that references another track has a track reference box ('tref' box), a stereoscopic video of the other side or the remaining view is determined as a primary view sequence in the above example. In this example, a location of a 'tref box having information about track reference can become a method of distinguishing a primary view sequence from a secondary view sequence. With use of the track reference, it is possible to connect view sequences that are associated with each other into a media file composed of two or more video tracks, thus making it possible to determine which tracks are related to each other. This can also be used as a method of connecting video tracks to each other to make one video from a multiview video. With use of the track reference method, it is possible to prevent stereoscopic video-related information from being inserted into several tracks in a duplicate manner by inserting the duplicated stereoscopic video-related information only in a particular track, i.e., one of the primary view sequence and the secondary view sequence.

According to another method for distinguishing a primary view sequence from a secondary view sequence, a primary view sequence and a secondary view sequence are determined, not only by using one information item or one parameter like the above methods, but also by combining two or more of stereoscopic video-related information, a field, a parameter and a box, such as stereoscopic video information required to express a configuration of a stereoscopic video, including a track ID and an 'is_left_first' parameter; parameters by which 'tref' box information can be identified; and handler type information. The following methods are possible methods of determining a primary view sequence and a secondary view sequence by combining two or more of stereoscopic video-related information, field, parameter and box: First, as for a stereoscopic video composed of two view sequences for a left view and a right view, it is possible to determine a corresponding track as a primary view sequence or a secondary view sequence according to a criterion for distinguishing a primary view sequence from a secondary view sequence, using a value of a 'is_left_first' field and information of a 'tref' box that references a stereoscopic video of another track. Alternatively, it is possible to determine a corresponding track as a primary view sequence or a secondary view sequence according to a criterion for distinguishing a primary view sequence from a secondary view sequence, using information of a 'tref' box that references a stereoscopic video of another track, and a track ID.

There is a further another method of determining a primary view sequence and a secondary view sequence for a stereoscopic video composed of two or more view sequences (i.e., multiple or multiview sequences), by combining two or more of stereoscopic video-related information, field, parameter and box. According to the further another method, it is possible to determine a primary view sequence and a secondary view sequence using a value of an 'is_left_first' field, an ID of a track, and a 'tref' box that references a stereoscopic video track.

Parameters or information other than those stated above can also be used as parameters or information for determining the primary view sequence and the secondary view sequence in the above manner, and the method of combining two or more of stereoscopic video-related information, field, parameter and box can also be extended or added with a variety of methods.

Below is a description of a method for indicating a relationship between tracks of view sequences, which pair together stereoscopic contents composed of two or more view sequences, according to embodiments of the present invention. The following description further includes a method for indicating a relationship between a stereoscopic view sequence and a monoscopic view sequence in contents having a stereoscopic video and a monoscopic video that are simultaneously displayed in one scene, according to embodiments of the present invention.

### First Embodiment

In order to decode stereoscopic contents composed of two or more view sequences and display the contents on a screen, it is necessary to indicate that a track of a left view sequence and a track of a right view sequence are associated with each other. However, since a box and information indicating a relationship between the tracks does not exist in current stereoscopic file formats, a first embodiment of the present invention provides the following method to solve this problem.

A handler reference box ('hdlr' box) and a track reference box ('tref box) are among the boxes defined in an 'ISO/IEC 14496-12 ISO base media file format' document. The handler reference box ('hdlr' box) represents a type of media data on the current track using a handler type ('handler_type'), and is defined as Table 1.

**Table 1**

| handler_type I | Description |
|---|---|
| Vide | video track |
| Soun | audio track |
| Hint | hint track |
| Meta | timed metadata track |

In order to connect two associated tracks to each other for the stereoscopic contents composed of two or more video tracks, the first embodiment of the present invention adds an 'svid' value, which indicates that a type of a media data in the corresponding track is a stereoscopic video, to the handler type ('handler_type') of the handler reference box ('hdlr' box) as shown in Table 2.

**Table 2**

| handler_type | Description |
|---|---|
| Vide | video track |
| Soun | audio track |
| Hint | hint track |
| Meta | timed metadata track |
| Svid | stereoscopic video track |

The track reference box ('tref' box) is used to connect further another track to which the current track makes reference using a reference type ('reference_type') and a track ID (track_ID). 'reference_type' presently defined in the 'ISO/IEC 14496-12 ISO base media file format' document is shown in Table 3.

**Table 3**

| reference_type | Description |
|---|---|
| hint | the reference track contain the original media for this hint track |
| cdsc | this track describes the referenced track |

In order to connect two associated tracks, the first embodiment of the present invention adds 'avmi' to 'reference_type' of the track reference box ('tref box) as shown in Table 4.

**Table 4**

| reference_type | Description |
|---|---|
| hint | the referenced track contain the original media for this hint track |
| cdsc | this track describes the reference track |
| avmi | the reference track contain the additional view media information |

FIG. 2 illustrates a file structure that connects tracks of associated view sequences to each other for the stereoscopic contents composed of two view sequences using the newly defined 'handler_type' and 'reference_type' according to the first embodiment of the present invention.

Referring to FIG. 2, a track of a stereoscopic left view sequence includes a 'tref' box, and connects with a track of a stereoscopic right view sequence, to which the corresponding track intends to make reference, using a track reference box ('tref' box) 210. Here, setting reference_type = 'avmi' in the track reference box ('tref box), notes that a corresponding reference track is a track including stereoscopic video-related information and is associated with a track to be referenced, i.e., a referenced track. The stereoscopic video-related information contained in the corresponding reference track is stereoscopic video information that each track of view sequences constituting the stereoscopic contents should basically include, and stereoscopic video-related information can be stored only in one of two associated tracks._When the track has a relationship with the referenced track, it means that the two tracks constitute a pair, which means that there is a dependency between the two tracks. In other words, in a case where a view sequence of the referenced track is a primary view sequence, since a view sequence of the reference track becomes a secondary view sequence, the reference track has a dependency to the referenced track. In addition, by setting handler_type = 'svid' of a handler reference box ('hdlr' box) 220 of the referenced track, it can be noted that the referenced track is a stereoscopic video track.

Since it is possible to determine a primary view sequence and a secondary view sequence according to a presence/absence of the track reference box ('tref box), a track of the stereoscopic left view sequence becomes a secondary view sequence track in FIG. 2, when a track having the track reference box ('tref' box) is determined as a secondary view sequence. The left view sequence can also become a primary view sequence according to a primary view sequence decision method. In the case where a primary view sequence and a secondary view sequence are determined using the track reference box ('tref' box) 210, when a track of the stereoscopic right view sequence is determined as a primary view sequence, a track of the stereoscopic right view sequence is set to be referenced from the track of the stereoscopic left view sequence. In this case, the reference track having the track reference box ('tref' box) is considered to be set as a secondary view sequence.

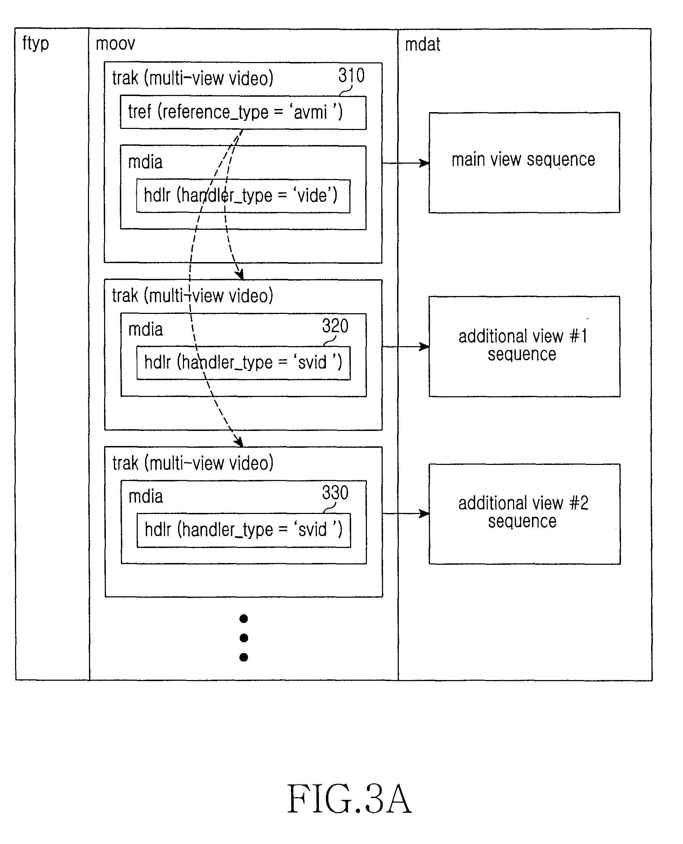

FIG. 3A illustrates a file structure that connects associated tracks to each other for the multiview contents having multiple view sequences according to the first embodiment of the present invention.

Referring to FIG. 3A, assuming that a track of a primary (or main) view sequence has a track reference box ('tref' box), it is possible to connect a track of the primary view sequence to a plurality of tracks having a relationship with this track using a track reference box ('tref box) 310. In this case, in the track including the primary view sequence, a reference type ('reference_type') of the track reference box ('tref' box) 310 is set as reference_type = 'avmi', and handler types ('handler_type') of handler reference boxes ('hdlr' boxes) 320 and 330 of the tracks referenced by this track are set as handler_type = 'svid'.

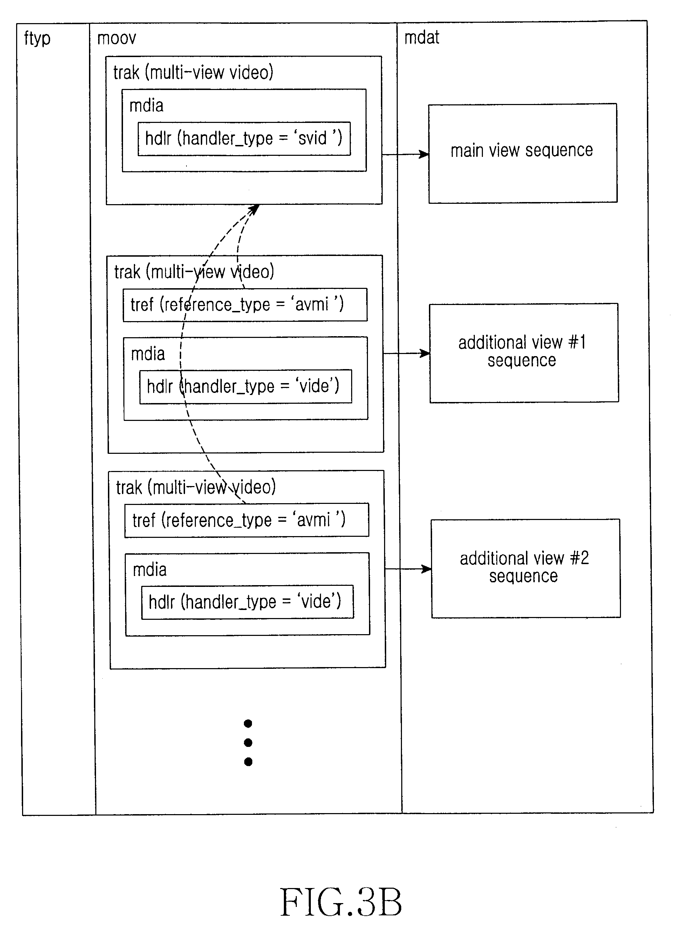

As described above, it is possible to distinguish a primary view sequence from a secondary view sequence using information of the track reference box ('tref' box). FIG. 3B illustrates a file structure that connects associated tracks to each other when a sequence of a track having no track reference box ('tref' box), i.e. a referenced track, is assumed to be a primary view sequence, according to the first embodiment of the present invention.

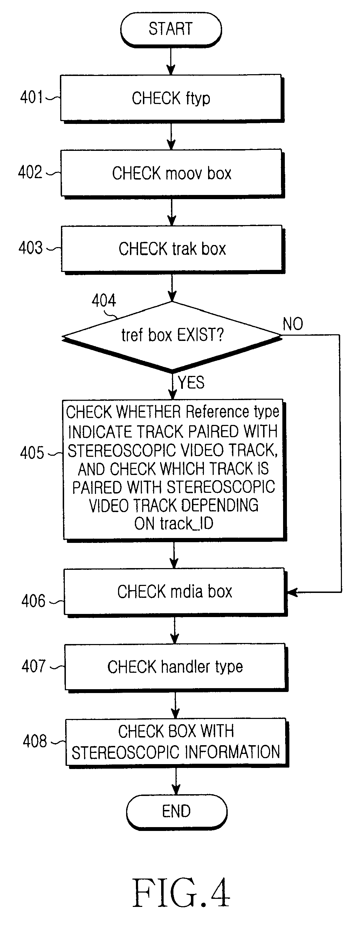

FIG. 4 illustrates an operation of a terminal for identifying associated video tracks and displaying them on a screen, when a stereoscopic video is composed of two or more view sequences, according to the first embodiment of the present invention.

Referring to FIG. 4, a terminal parses a file type box ('ftyp' box) in a media file in step 401. In steps 402 and 403, the terminal parses a 'moov' box and a track box ('trak' box) of the media file. In step 404, the terminal determines whether a track reference box ('tref' box) exists in the track box. When the track has a track reference box ('tref' box), the terminal checks a reference type ('reference_type') of the track reference box ('tref' box) in step 405. If it is determined that the reference type ('reference_type') is 'avmi', the terminal checks a reference track ID ('track_ID') of the track reference box ('tref' box), and determines which track of a stereoscopic view sequence is paired with the corresponding track. The terminal checks a media information box ('mdia' box) in step 406, and checks in step 407 a handler type ('handler_type') of a handler box ('hdlr' box), based on which the terminal can determine a media data type of the corresponding track. In step 408, the terminal checks information of the remaining boxes containing stereoscopic information, parses stereoscopic video-related information of the tracks of the stereoscopic view sequences, and displays associated view sequences of the information on a screen. A series of processes for parsing the track box ('trak' box) is performed from the first track to the last track of the media file in the same way when the corresponding tracks are tracks of the stereoscopic view sequences.

However, if it is determined in step 404 that the track has no track reference box ('tref' box), the terminal proceeds to step 406 where the terminal checks media information box ('mdia' box) of the corresponding track. Thereafter, the terminal checks a handler type ('handler_type') in step 407, and checks the remaining boxes containing stereoscopic information and displays stereoscopic contents on the screen in step 408.

Although the terminal identifies a primary view sequence and a secondary view sequence in step 408 of FIG. 4, the order of the steps in the process of identifying the primary view sequence and the secondary view sequence can change according to the above-described method of distinguishing the primary view sequence from the secondary view sequence.

When identifying the primary view sequence and the secondary view sequence using, for example, the track reference box ('tref' box), the terminal identifies the primary view sequence and the secondary view sequence by checking a reference type ('reference_type') and a track ID ('track_ID') of the track reference box ('tref' box) in step 405 of FIG. 4. In a case where a track of a view sequence having a track reference box ('tref'box) is determined to be a secondary view sequence, when a reference type ('reference_type') of the track reference box ('tref' box) is 'avmi', a reference track ID ('track_ID') is a track ID ('track_ID') of the primary view sequence. For example, when a track with a track ID = 1 (track_ID = 1) has a track reference box ('tref' box), a reference type of the corresponding track reference box is 'avmi' (reference_type = 'avmi') and a reference track ID is 2 (track_ID = 2), the track with a track ID = 1 (track_ID = 1) is a track of a stereoscopic view sequence, which is paired with a track with a track ID = 2 (track_ID = 2), and a view sequence of the track with a track ID = 2 (track_ID = 2) is a primary view sequence.

As a further another method for distinguishing a primary view sequence from a secondary view sequence according to an embodiment of the present invention, when the terminal checks an 'is_left_first' field indicating which of the left view sequence and the right view sequence (or, alternatively, which of two or more view sequences) in composition type information of a stereoscopic video is first encoded, and determines which of the left view sequence and the right view sequence (or, alternatively, which of two or more view sequences) is the primary view sequence or the secondary view sequence according to a value of the corresponding field, the terminal identifies the primary view sequence and the secondary view sequence by checking a stereoscopic-related information box including the 'is_left_first' parameter and displays the related view sequences in step 408 according to the operation of FIG. 4.

In this way, the operation order of the process of identifying the primary view sequence and the secondary view sequence is subject to change according to each of the methods for distinguishing the primary view sequence from the secondary view sequence according to the present invention.

Although a handler type of the referenced tracks, i.e. remaining tracks having no 'tref' box, is presented as a stereoscopic video type ('svid') in an embodiment of the present invention, it is also possible that the referenced tracks can be a video type ('vide') and the reference tracks can be a stereoscopic video type ('svid'). Also, handler types ('handler_type') of both the reference tracks and the referenced tracks can be represented as a video type ('vide') without separate discrimination.

Meanwhile, the processes of identifying tracks of a media file and displaying the tracks on the screen, described in FIG. 4, may not be provided sequentially for some terminals or systems. A process of parsing the file format and an operation of the corresponding terminal, which are not described in detail herein, follow ISO/IEC 14496-12 and ISO/IEC 23000-11.

### Second Embodiment

A second embodiment of the present invention provides a track reference method for referencing a track including camera parameters and display safety information, which are additional information, using a track reference box ('tref' box) in stereoscopic contents. The camera parameters that can be included in the stereoscopic contents as additional information may include baseline, focal_length, convergence_distance, translation, rotation, etc., and the display safety information may include display size-related information, viewing distance, disparity information, etc. Though the camera parameters and display safety information are described as additional information herein, these parameters and safety information are optional. Therefore, a box containing the corresponding information can be described as an optional box.

The second embodiment of the present invention adds 'cdsi' to a reference_type of a 'tref box as shown in Table 5, for a track reference for a track including camera parameters and display safety information used for acquiring stereoscopic contents.

**Table 5**

| reference_type | Description |
|---|---|
| hint | the referenced track contain the original media for this hint track |
| cdsc | this track describes the referenced track |
| cdsi | the referenced track contain the stereoscopic camera and display safety information |

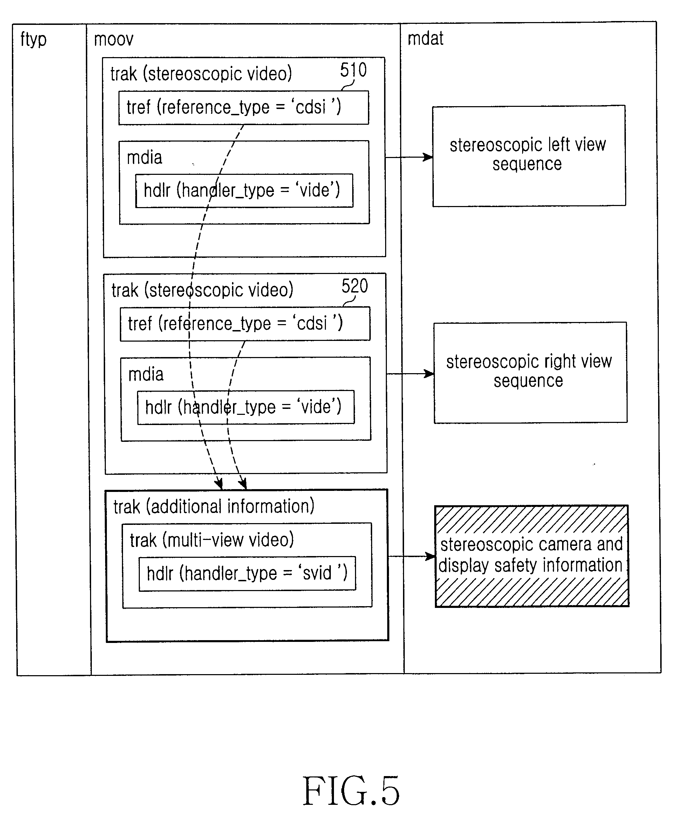

FIG. 5 illustrates a method for referencing a track including camera parameters and display safety information, which are additional information for stereoscopic contents, according to the second embodiment of the present invention.

Referring to FIG. 5, a track of a stereoscopic left view sequence and a track of a stereoscopic right view sequence can reference tracks in which additional information is included, using track reference boxes ('tref' boxes) 510 and 520. In this case, there is no need to store the additional information in both of the tracks, and it is possible to prevent the same information from being stored in multiple tracks in a duplicate manner as other tracks reference the track including the additional information.

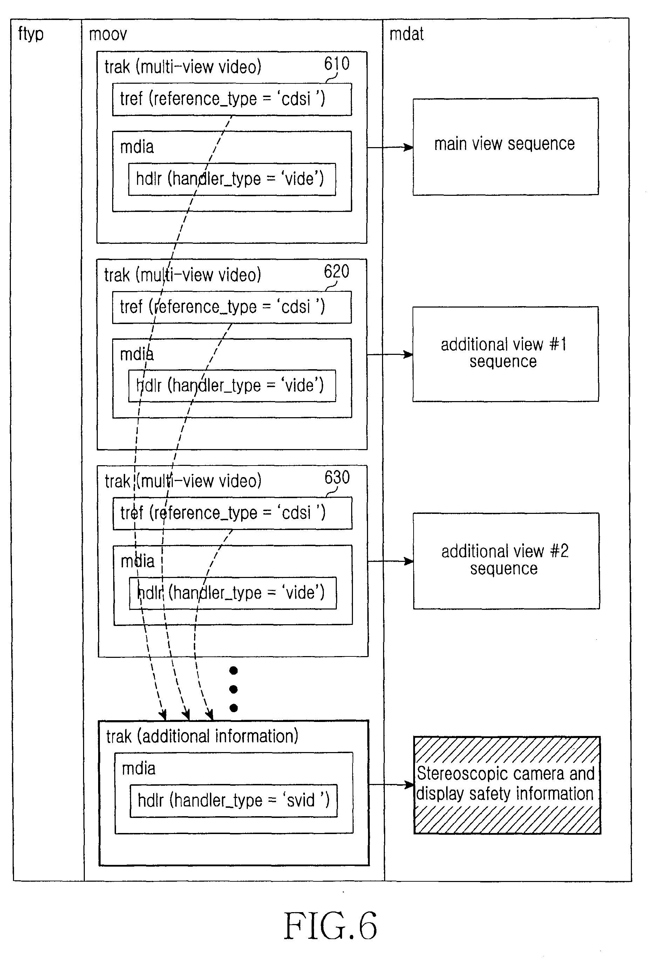

FIG. 6 illustrates a method for applying the second embodiment of the present invention to multiview contents having multiple view sequences.

Even in this case, as illustrated in FIG. 5, tracks including each of the view sequences make reference to a track including additional information using 'tref' boxes 610, 620 and 630.

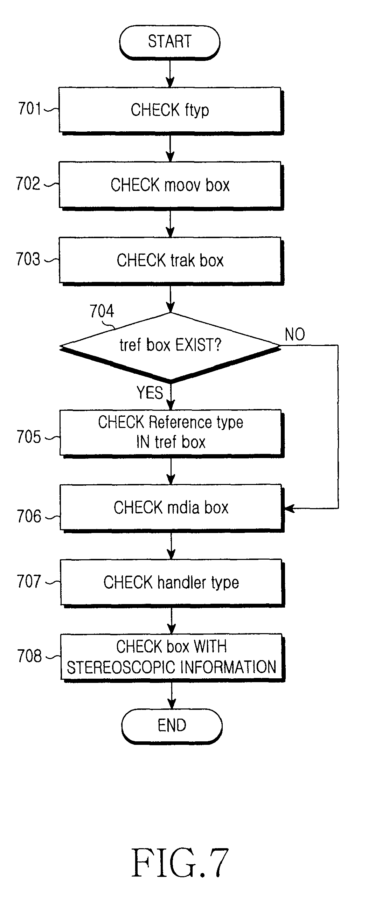

FIG. 7 is a flowchart illustrating an operation of a terminal according to the second embodiment of the present invention.

Referring to FIG. 7, the terminal parses a file type box ('ftyp' box) in a media file in step 701. The terminal parses a movie data box ('moov' box) and a track box ('trak' box) in the media file in step 702 and 703, respectively. The terminal determines in step 704 whether a track reference box ('tref' box) exists in the track box. As for a track having a track reference box ('tref' box), the terminal checks a reference type ('reference_type') in the track reference box ('tref' box) in step 705. If it is determined that the reference type ('reference_type') is 'cdsi', the terminal checks a reference track ID ('track_ID') of the track reference box ('tref' box) to determine which track contains additional information that includes camera parameters and display safety information, which are additional information for the stereoscopic video to which the corresponding track intends to make reference. The terminal checks a media information box ('mdia' box) in step 706, and checks in step 707 a handler type ('handler_type') of a handler box ('hdlr' box), by which the terminal can determine a type of media data of the corresponding track. Finally, in step 708, the terminal checks information of the remaining boxes containing stereoscopic information, parses stereoscopic video-related information of the tracks of stereoscopic view sequences, and displays the associated tracks on the screen. A series of processes for parsing the track box ('trak' box) is performed from the first track to the last track of the media file in the same way as when the corresponding tracks are tracks of the stereoscopic view sequences.

However, if it is determined in step 704 that the track has no track reference box ('tref' box), the terminal jumps to step 706 where the terminal checks a media information box ('mdia' box) of the corresponding track. Thereafter, the terminal checks a handler type ('handler_type') in step 707, and checks the remaining boxes containing stereoscopic information and displays stereoscopic contents on the screen in step 708.

Although the terminal identifies the primary view sequence and the secondary view sequence in step 708 of FIG. 7, the steps of the process of identifying the primary view sequence and the secondary view sequence can change order according to the method of distinguishing the primary view sequence from the secondary view sequence, as described in FIG. 4 based on the first embodiment of the present invention.

When the handler type of the track, parsed in step 707, is a stereoscopic video type ('svid'), the corresponding track is a track that includes optional information containing camera parameters and display safety information that are additional information for the stereoscopic video.

Meanwhile, the process of identifying tracks of the media file and displaying the tracks on the screen, described in FIG. 7, might not be carried out in sequence for some terminals or systems. A process of parsing the file format and its terminal's operation, which are not described in detail herein, follow ISO/IEC 14496-12 and ISO/IEC 23000-11.

### Third Embodiment

In a case of a service in which stereoscopic contents and monoscopic contents are simultaneously displayed in one scene as elements constituting one scene, it is necessary to connect tracks of two view sequences to decode and display the stereoscopic view sequence and the monoscopic view sequence that should be described in one scene, so as to help the user know they are associated tracks. However, since there is no way to describe the relationship in current stereoscopic file formats, the third embodiment of the present invention proposes a method for solving this problem.

A handler reference box ('hdlr' box) and a track reference box ('tref' box) are among the boxes defined in the 'ISO/IEC 14496-12 ISO base media file format' document. The handler reference box ('hdlr' box) represents a type of media data on the current track using a handler type ('handler_type') as described above. The third embodiment of the present invention adds 'mvid' to the handler type ('handler_type') of the handler reference box ('hdlr' box) as shown in Table 6 to connect a track of a stereoscopic view sequence to a track of a monoscopic view sequence that should be described in one scene.

**Table 6**

| handler_type | Description |
|---|---|
| vide | video track |
| soun | audio track |
| hint | hint track |
| meta | timed metadata track |
| mvid | monoscopic video track |

The track reference box ('tref' box) is a box used for connecting another track referenced by the current track using a reference type ('reference_type') and a track ID ('track_ID'). The third embodiment of the present invention adds 'scmi' to the reference type ('reference_type') of the track reference box ('tref' box) as shown in Table 7 to connect two associated tracks.

**Table 7**

| reference_type | Description |
|---|---|
| hint | the referenced track contain the original media for this hint track |
| cdsc | this track describes the referenced track |
| scmi | the referenced track contain the spatially combined media track |

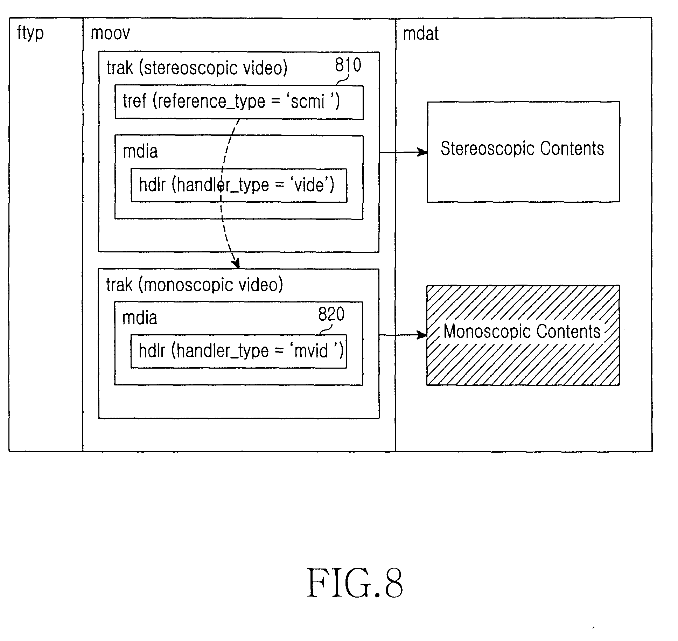

FIG. 8 illustrates a file structure that connects a track of a stereoscopic view sequence and a track of a monoscopic view sequence to each other, which are formed into one scene in the contents having a stereoscopic view sequence and a monoscopic view sequence that are simultaneously displayed in one scene, using newly defined 'handler_type' and 'reference_type', according to the third embodiment of the present invention.

Referring to FIG. 8, the current track is a track of a stereoscopic view sequence, and a track of a monoscopic view sequence that should be displayed in one scene together with the stereoscopic view sequence is connected to the current track using a track reference box ('tref' box) 810. When setting the reference type as reference_type = 'scmi', the referenced track is a track (spatially combined media track) including monoscopic contents that should be displayed in one scene together with a stereoscopic video track which is a reference track. In addition, when setting a handler type in a handler reference box ('hdlr' box) 820 of the referenced track as handler_type = 'mvid', the referenced track is a track (spatially combined media track) of a monoscopic view sequence that should be displayed in one scene together with a stereoscopic view sequence.

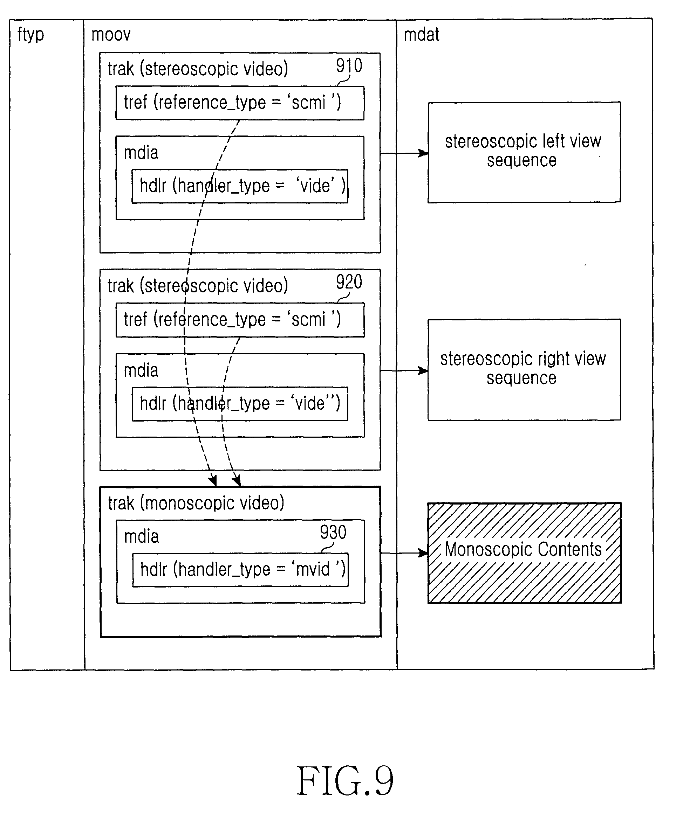

FIG. 9 illustrates a file structure that connects stereoscopic view sequences, composed of two or more view sequences, and a monoscopic view sequence to each other in the contents having stereoscopic view sequences and a monoscopic view sequence, which are simultaneously displayed in one scene according to the third embodiment of the present invention.

Referring to FIG. 9, a track of a stereoscopic left view sequence and a track of a stereoscopic right view sequence, which constitute a stereoscopic video, can be connected so as to reference a track of a monoscopic view sequence that should be displayed together in one scene, using track reference boxes ('tref' box) 910 and 920, respectively. Even in this case, when reference types of the track reference boxes ('tref' box) 910 and 920 are set as reference_type = 'scmi' for the track of the stereoscopic left view sequence and the track of the stereoscopic right view sequence, respectively and a handler type of a handler reference box ('hdlr' box) 930 of the referenced track is set as handler_type = 'mvid', the track of the referenced view sequence is a track (spatially combined media track) of the monoscopic view sequence that should be displayed in one scene together with the stereoscopic view sequences.

### Fourth Embodiment

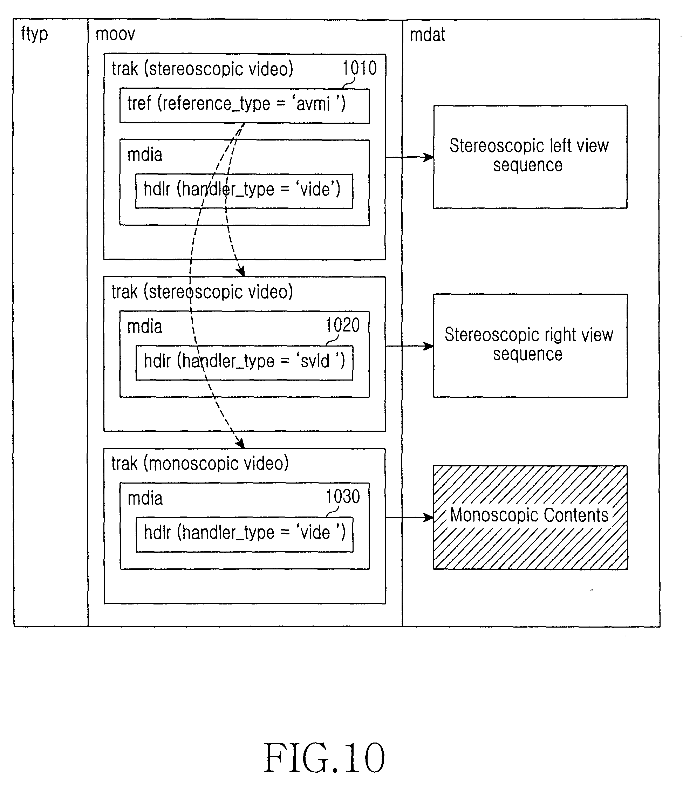

FIG. 10 illustrates further another file structure that connects a track of a stereoscopic view sequence and a track of a monoscopic view sequence to each other in the contents having a stereoscopic view sequence and a monoscopic view sequence that are simultaneously displayed in one scene, using newly defined handler type (handler_type) 'svid' and reference type ('reference_type')'avmi' according to the fourth embodiment of the present invention.

The fourth embodiment of the present invention references a track according to the same method as the track reference method used in the first embodiment of the present invention. However, in the fourth embodiment of the present invention, a track reference box ('tref box) 1010 is not only used to connect with the stereoscopic view sequence making a pair with its view sequence, but is also used to connect with the monoscopic view sequence which is simultaneously displayed in one scene. By setting reference_type = 'avmi' of the track reference box ('tref' box) 1010, handler_type = 'svid' of a handler reference box ('hdlr' box) 1020 of the referenced stereoscopic video track, and handler_type='vide' of a handler reference box ('hdlr' box) 1030 of the referenced monoscopic video track, it is possible to distinguish the remaining one view sequence of a stereoscopic video, which is paired with the primary view sequence, from the monoscopic view sequence that should be simultaneously displayed in one scene together with the stereoscopic contents.

In the example of FIG. 10, as a track of a stereoscopic right view sequence is determined as a primary view sequence track according to the above-described method of determining a primary view sequence, a track having a track reference box ('tref' box) is set as a secondary view sequence.

Further, in this embodiment of the present invention, when a connection relationship between stereoscopic contents composed of two or more tracks is represented using reference type='avmi', handler_type of the primary view sequence track is 'vide', and handler_type of the secondary view sequence track becomes 'svid'. Of course, in this discrimination, the referenced view sequence may also become a video type ('vide'). Also, all view sequences can be represented using only the video type ('vide') without a separate distinction.

### Fifth Embodiment

A fifth embodiment of the present invention represents a relationship between stereoscopic contents composed of two or more view sequences using the track reference method like the first embodiment of the present invention, and provides a structure of a stereoscopic media file generated by storing relative display and camera information from a referencing view sequence for the remaining view sequences other than the referencing view sequence.

In the stereoscopic video-related information, additional information is included in the stereoscopic contents as described in the first and second embodiments of the present invention. As the additional information that can be included in the stereoscopic contents, there is display and camera information for a stereoscopic video, including stereoscopic video-related information obtained in the process of acquiring the stereoscopic video. Such display and camera information for a stereoscopic video can include baseline, focal_length, convergence_distance, translation, rotation, etc., and the display safety information can include display size-related information, viewing distance, disparity information, etc. Although this information is referred to herein as additional information, this information is optional information. Therefore, a box containing the corresponding information can be expressed as an optional box.

One of the methods for storing display and camera information for a stereoscopic video is to store relative values for the display and camera information for a referencing view sequence in the remaining view sequences as parameter values of respective fields on the basis of the referencing view sequence. For example, when the referencing view sequence is assumed to be a primary view sequence, all the display and camera information for the primary view sequence is stored as 0, and parameter values of the relative display and camera information from the referencing view sequence for each field are stored in the remaining view sequence, i.e., the secondary view sequence, except for the primary view sequence. Since all the display and camera information for a stereoscopic video of a referencing view sequence is set to 0, the corresponding information can be omitted. Thus, the relative display and camera information for the display and camera information of the referencing view sequence can only be stored in the remaining view sequence. For example, when a distance between cameras for two view sequences, which is one of the display and camera information of the stereoscopic video, is assumed to be 5, since a value of a field for the corresponding information of the referencing view sequence is 0, the '0' value is omitted, and the distance, 5, from the camera of the referencing view sequence is stored as a value of a field for the corresponding information of the remaining view sequences.

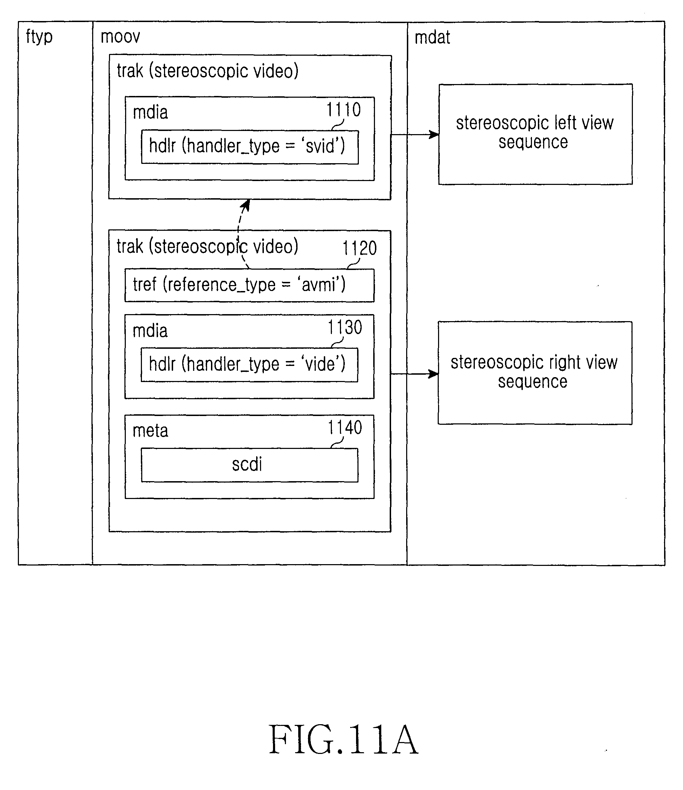

FIG. 11A illustrates a file structure according to the fifth embodiment of the present invention.

In FIG. 11A, a referencing view sequence is assumed to be a primary view sequence, and in a stereoscopic media file structure composed of two view sequences, an 'scdi' box 1140 that stores relative display and camera information from the primary view sequence is contained in a track of a secondary view sequence; and a track of the primary view sequence is connected to a track of the secondary view sequence having 'scdi' information using a handler type 'svid' 1110, and a reference type 'avmi' 1120 in the same method as the track reference method used in the first embodiment of the present invention. Even in this case, the video type 'vide' can be used as the handler type 1110 of the stereoscopic view sequence. In FIG. 11A, the primary view sequence is shown as a left view sequence with no track reference box ('tref' box), and in the file structure, a track of a stereoscopic view sequence with a track reference box ('tref' box), i.e., a view sequence with reference type ('reference_type') = 'avmi', includes an 'scdi' box containing relative display and camera information from the referencing view sequence.

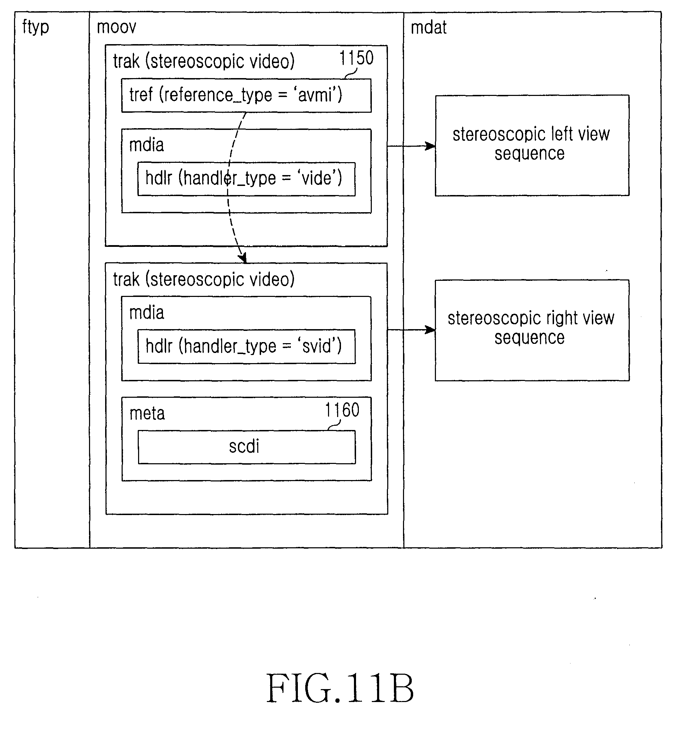

FIG. 11B illustrates a case where a track with a track reference box ('tref' box) 1150 that references a track is provided independently of a track with an 'scdi' box 1160. Here, the referencing view sequence for 'scdi' information is the left view sequence, and relative 'scdi' information of the left view sequence is contained in a track of a right view sequence.

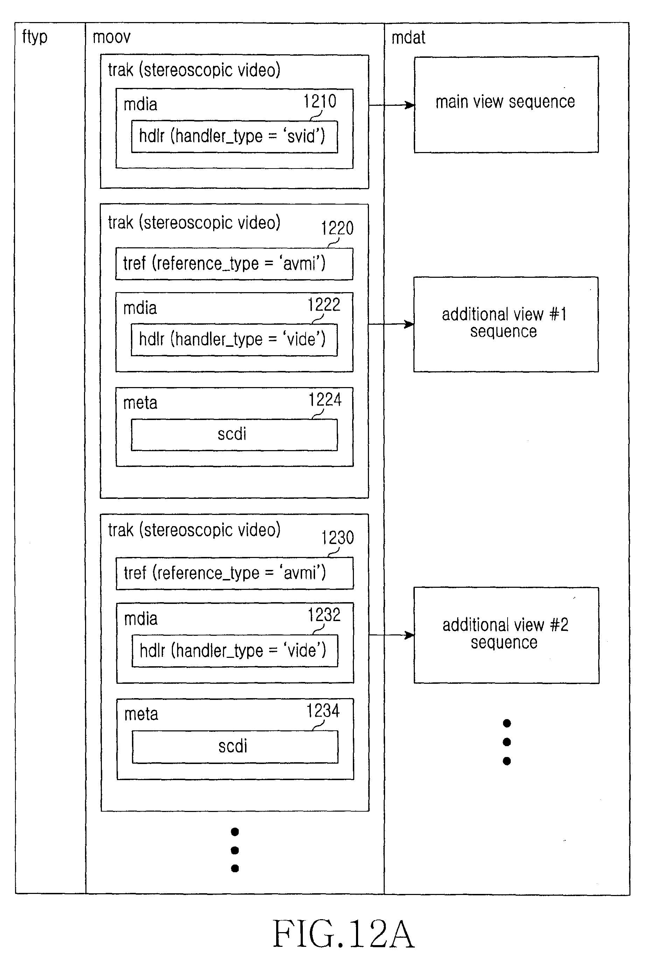

FIG. 12A illustrates a file structure generated by extending the method of the fifth embodiment of the present invention for the multiview contents having two or more view sequences.

Referring to FIG. 12A, according to the fifth embodiment of the present invention, 'scdi' boxes 1224 and 1234 that store relative display and camera information from the primary view sequence are contained in the remaining multiple view sequences other than the primary view sequence, and the track of the primary view sequence is connected to the tracks of the remaining view sequences with 'scdi' information using a handler type 'svid' 1210 and reference types 'avmi' 1220 and 1230 in the same method as the track reference method used in the first embodiment of the present invention. Even in this case, the video type 'vide' can be used as a handler type of the stereoscopic video (1222 and 1232).

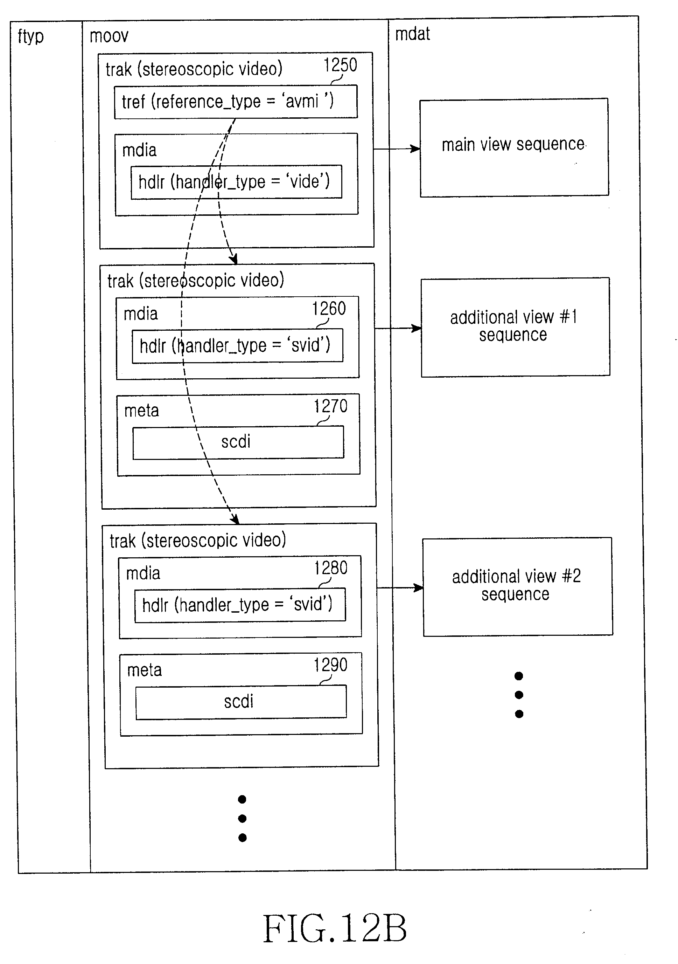

FIG. 12B illustrates a case where a track with a 'tref' box 1250 that references a track is provided independently of tracks with 'scdi' boxes 1260 and 1270.

In the first to fifth embodiments of the present invention, titles, names, and semantics of the reference types and the handler types can be expressed with different titles, names, and semantics as long as they correspond to the same objects and methods.

Next, a description will be made of a system for generating and replaying a media file using a media file format according to an embodiment of the present invention. The system according to an embodiment of the present invention can be roughly composed of a media file generation apparatus and a media file replay apparatus.

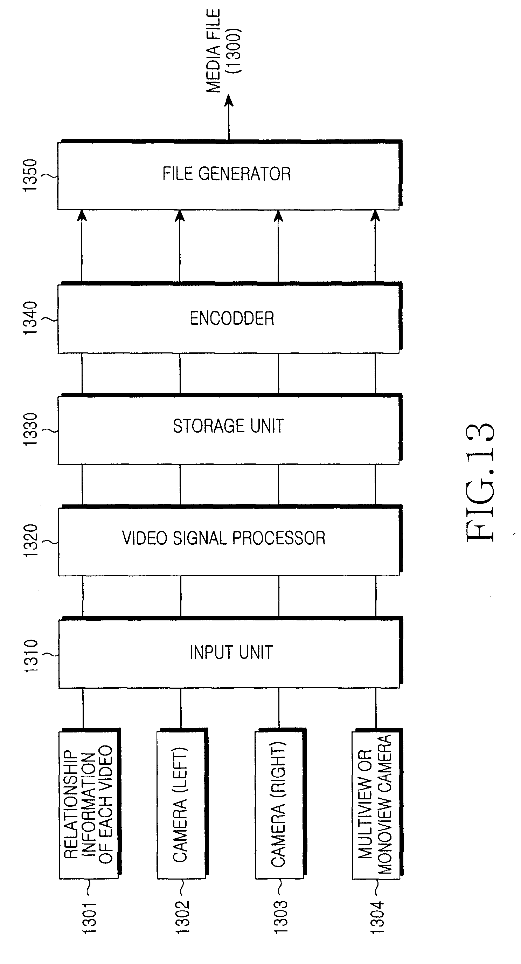

FIG. 13 illustrates a media file generation apparatus according to an embodiment of the present invention.

Referring to FIG. 13, the media file generation apparatus according to an embodiment of the present invention includes two or more cameras 1301 to 1304, an input unit 1310, a video signal processor 1320, a storage unit 1330, an encoder 1340, and a file generator 1350.

The cameras 1301 to 1304 each photograph a specific subject at the light view and the right view, and output different view sequences. When the monographic video is serviced, monoscopic video data is input to the input unit 1310 together with stereoscopic video data. At this point, such information as camera parameters can also be delivered to the input unit 1310.

The video signal processor 1320 preprocesses all video data received through the input unit 1310. Here, the preprocessing operation refers to an operation of converting an analog value generated by recognizing an external video value, i.e., light and color components, by means of a Charge Coupled Device (CCD) or Complementary Metal-Oxide Semiconductor (CMOS)-type sensor, into a digital signal.

The storage unit 1330 stores the video data preprocessed by the video signal processor 1320, and provides the stored video data to the encoder 1340. FIG. 13 shows the storage unit 1330, but the storage unit 1330 does not separately show a storage construction for buffering between the elements shown in FIG. 13 that may be included. The encoder 1340 encodes each video data provided from the storage unit 1330. The encoding operation performed by the encoder 1340 is the encoding of data, which can be skipped as occasion demands.

The file generator 1350 generates a media file 1300 using each video data encoded by the encoder 1340. The video data is stored in a data area, particularly in a media data area, and track reference information for indicating a relationship between video data, handler information for representing a media type of each video data, composition type of a stereoscopic video, and camera and display information are stored in a box for the corresponding information of the track of each video data. The generated media file 1300 is input or transmitted to a stereoscopic media file replay apparatus, and the media file replay apparatus replays and displays a stereoscopic service video from the media file 1300.

Next, a description will be made of a stereoscopic media file replay apparatus according to an embodiment of the present invention.

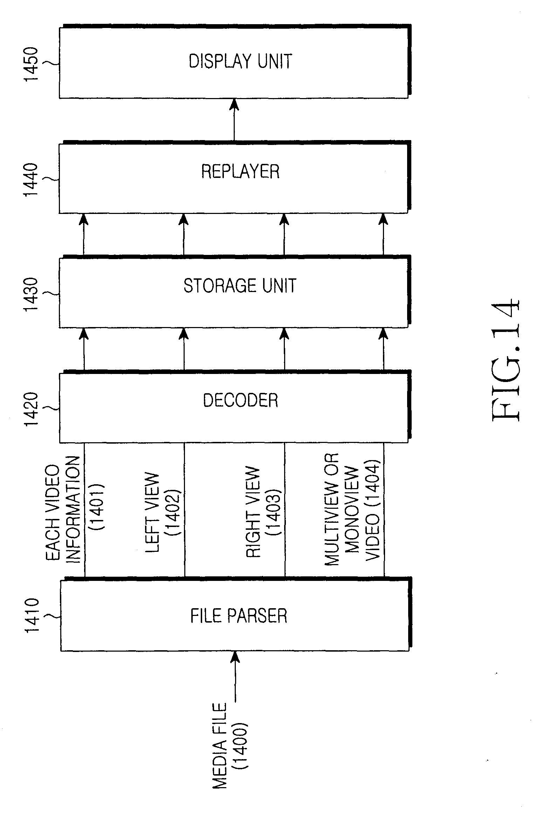

FIG. 14 is a block diagram illustrating a media file replay apparatus according to an embodiment of the present invention. As shown in FIG. 14, the media file replay apparatus includes a file parser 1410, a decoder 1420, a storage unit 1430, a replayer 1440, and a display unit 1450.

The file parser 1410 receives and parses a media file 1400 generated, for example, by the file generator 1350 in the media file generation apparatus. In this case, the file parser 1410 parses information stored respectively in file, moov, track and metadata areas, and then extracts video data 1401 to 1404 stored in a media data area. Through the file parsing operation shown in FIGs. 4 and 7, the file parser 1410 can extract even the information indicating relationship, including reference information between tracks, and identify associated tracks.

The decoder 1420 decodes the extracted video data. In an exemplary embodiment of the present invention, the decoder 1420 is used in cases where the media file generation apparatus encodes the data using the encoder 1340. The decoded data is stored in the storage unit 1430. The replayer 1440 synthesizes and replays associated stereoscopic view sequences using the video data stored in the storage unit 1430 depending on identification information, and/or replays the associated stereoscopic view sequence and monoscopic view sequence together. The display unit 1450 displays the replayed view sequences. The display unit 1450 may employ a barrier Liquid Crystal Display (LCD). In this case, the barrier LCD is turned off for the monoscopic video in the media file, and turned on for the stereoscopic video, so that each video can be displayed on the screen.

As is apparent from the foregoing description, the present invention can explicitly determine tracks which are associated with each other, from among the tracks included in the stereoscopic contents composed of two or more view sequences, or in the contents having a stereoscopic video and a monoscopic video which are simultaneously displayed in one scene, and can also avoid redundancy for the additional metadata.

While the invention has been shown and described with reference to a certain preferred embodiments thereof, it will be understood by those skilled in the art that various changes in form and details may be made therein without departing from the spirit and scope of the invention as defined by the appended claims.

## Claims

1. A computer readable medium having data stored thereon, comprising:
a media data box including two or more media data items; and
a movie data ('moov') box including information on view sequence data in the media data,
wherein the 'moov' box includes track reference information indicating that a track box for one view sequence references a track box of another view sequence.

2. The computer readable medium of claim 1, wherein the track reference information is included in a track reference box of the track box.

3. The computer readable medium of claim 2, wherein the view sequence data is divided into primary view sequence data and secondary view sequence data, and
wherein the secondary view sequence data includes the track reference box.

4. The computer readable medium of claim 3, wherein the 'moov' box of the secondary view sequence data comprises a box in which relative display and camera information for the primary view sequence data is stored.

5. The computer readable medium of claim 1, wherein the 'moov' box comprises a track header in which header information for each view sequence data is stored, and
wherein referencing view sequence data is distinguished from referenced view sequence data according to a track IDentifier (ID) stored in the track header.

6. A computer-implemented method comprising:
receiving a media file;
parsing a media data box of the received media file including two or more view sequence data, and a movie data ('moov') box including information on the view sequence data; and
generating a video based on a referencing view sequence and a referenced view sequence, according to track reference information that is included in the 'moov' box and indicates that a track box for one view sequence references a track box for another view sequence.

7. The computer-implemented method of claim 6, wherein the track reference information is included in a track reference box of the track box.

8. The computer-implemented method of claim 7, wherein the view sequence data is divided into primary view sequence data and secondary view sequence data, and
wherein the secondary view sequence data comprises the track reference box.

9. The computer-implemented method of claim 8, wherein the 'moov' box of the secondary view sequence data comprises a box in which relative display and camera information for the primary view sequence data is stored.

10. The computer-implemented method of claim 6, wherein the 'moov' box comprises a track header in which header information for each view sequence data is stored, and
wherein referencing view sequence data is distinguished from referenced view sequence data depending on a track IDentifier (ID) stored in the track header.

11. A terminal apparatus comprising:
a file parser for parsing a media data box of a media file including two or more view sequence data and a movie data ('moov') box including information on the view sequence data, and extracting a video based on a referencing view sequence and a referenced view sequence, according to track reference information that is included in the 'moov' box and indicates that a track box for one view sequence references a track box for another view sequence; and
a display unit for displaying the extracted video.

12. The terminal apparatus of claim 11, wherein the track reference information is included in a track reference box of the track box.

13. The terminal apparatus of claim 12, wherein the view sequence data is divided into primary view sequence data and secondary view sequence data, and
wherein the secondary view sequence data comprises the track reference box.

14. The terminal apparatus of claim 13, wherein the 'moov' box of the secondary view sequence data comprises a box in which relative display and camera information for the primary view sequence data is stored.

15. The terminal apparatus of claim 11, wherein the 'moov' box comprises a track header in which header information for each view sequence data is stored, and
wherein the file parser distinguishes referencing view sequence data from referenced view sequence data depending on a track IDentifier (ID) stored in the track header.
